# EUROPÄISCHE PATENTSCHRIFT

(11) **EP 2 590 733 B1**
(45) Veröffentlichungstag und Bekanntmachung des Hinweises auf die Patenterteilung: **05.09.2018**
(21) Anmeldenummer: 11729636.8
(22) Anmeldetag: 06.07.2011
(51) Int. Cl.: B01J 2/00

(54) **VERFAHREN ZUM BEFEUCHTEN VON OBERFLÄCHEN EINES FESTKÖRPERS**
METHOD FOR MOISTENING SURFACES OF A SOLID BODY
PROCÉDÉ D'HUMIDIFICATION DES SURFACES D'UN CORPS SOLIDE

(30) Priorität: 08.07.2010 DE 102010026591
(43) Veröffentlichungstag der Anmeldung: 15.05.2013
(73) Patentinhaber: Neuhaus, Dietmar, 40591 Düsseldorf (DE)
(72) Erfinder: Neuhaus, Dietmar, 40591 Düsseldorf (DE)
(74) Vertreter: dompatent von Kreisler Selting Werner - Partnerschaft von Patent- und Rechtsanwälten mbB
(86) Internationale Anmeldenummer: PCT/EP2011/061425
(87) Internationale Veröffentlichungsnummer: WO 2012/004311

(56) Entgegenhaltungen:
- EP-A1- 0 484 121
- EP-A1- 0 673 644
- CN-A- 101 074 071
- DE-A1- 2 139 817
- DE-A1- 2 304 298
- DE-B- 1 230 401
- US-A- 3 193 985
- US-A- 4 738 692
- US-A1- 2009 226 840

## Beschreibung

Die vorliegende Erfindung betrifft ein Verfahren zum Befeuchten von Oberflächen eines Festkörpers nach Anspruch 1.

Bei Produktionsprozessen in der chemischen Industrie, der Papierindustrie, der Druckindustrie, der Nahrungsmittelindustrie, der Pharmaindustrie und der Landwirtschaft gibt es häufig Arbeitsschritte, in denen ein als Festkörper vorliegendes Material befeuchtet werden muss. Befeuchten bedeutet hierbei die Anlagerung von Feuchtmittel an der Oberfläche der Festkörper. Das Material kann dabei kleinteilig, beispielsweise in Form von Granulaten oder Pulvern, oder großteilig, beispielsweise als Festkörpergegenstand, vorliegen.

Es ist bekannt, Befeuchtungsmittel in der flüssigen Phase auf die zu befeuchtenden Festkörper, beispielsweise durch Besprühen, aufzutragen. Ein derartiges Verfahren ist aus CN 101 074 071 A bekannt. Eine derartige Befeuchtung ist jedoch häufig nicht möglich oder ungünstig, da ein vorgegebener Grad der Befeuchtung über die Befeuchtung in der flüssigen Phase nur schwierig eingestellt werden kann. Granulate und Pulver können bei einer Befeuchtung über die flüssige Phase des Befeuchtungsmittels zudem verklumpen, was ebenfalls häufig nicht erwünscht ist.

Es ist daher bekannt, die Befeuchtung über die gasförmige Phase des Befeuchtungsmittels vorzunehmen, wobei der Grad der Befeuchtung besser gesteuert werden kann und eine Verklumpung von Pulvern und Granulaten vermieden werden kann. Ein Verfahren zum Befeuchten von Pulver mit Wasserdampf ist aus DE 12 30 401 B bekannt.

Die Befeuchtung über die Gasphase des Befeuchtungsmittels hat jedoch den Nachteil, dass sie mehr Zeit beansprucht als die Befeuchtung über die flüssige Phase des Befeuchtungsmittels.

Insbesondere wenn erwünscht ist, dass sich ein kompletter Film von Befeuchtungsmittel auf der Oberfläche des Festkörpers bilden soll, ist die Befeuchtung über die Gasphase des Befeuchtungsmittels sehr langwierig. Wenn sich ein Film von Befeuchtungsmittel auf der Oberfläche des Festkörpers gebildet hat, spricht man auch von einer Benetzungskatastrophe.
Es ist daher die Aufgabe der vorliegenden Erfindung, ein Verfahren zum Befeuchten von Festkörperoberflächen mit einem Befeuchtungsmittel, insbesondere Wasser, bereitzustellen, bei dem die Befeuchtung in effizienter und schneller Art und Weise über die gasförmige Phase des Befeuchtungsmittels erfolgen kann.
Zur Lösung der Aufgabe dienen die Merkmale des Anspruchs 1.
Das erfindungsgemäße Verfahren zum Befeuchten von Oberflächen eines Festkörpers mit einem gasförmigen Befeuchtungsmittel, insbesondere Wasser, sieht folgende Schritte vor:
a) Aussetzen eines Festkörpers einer ersten Atmosphäre mit einer ersten relativen Gasfeuchte R1 des Befeuchtungsmittels für einen Zeitraum t1, derart, dass das Befeuchtungsmittel an der Oberfläche des Festkörpers adsorbiert wird, wodurch die Oberfläche des Festkörpers teilweise vom Befeuchtungsmittel bedeckt wird,
b) Aussetzen eines Festkörpers einer zweiten Atmosphäre mit einer zweiten relativen Gasfeuchte R2 des Befeuchtungsmittels für einen Zeitraum t2, derart, dass das Befeuchtungsmittel teilweise von der Oberfläche des Festkörpers desorbiert wird,
c) Mehrfaches Wiederholen der Schritte a) und b)
d) Aussetzen des Festkörpers der ersten Atmosphäre für eine Zeitraum t3, wobei nach dem Zeitraum t3 eine Benetzungskatastrophe des Festkörpers mit dem Befeuchtungsmittels vorliegt.
Es hat sich herausgestellt, dass durch die Anwendung des erfindungsgemäßen Verfahrens ein Befeuchten von Oberflächen eines Festkörpers mit einem gasförmigen Befeuchtungsmittel in effizienter und schneller Art und Weise erfolgen kann.

Bei der Durchführung der erfindungsgemäßen Verfahrensschritte a) bis d) muss die relative Gasfeuchte R1 der Atmosphäre nicht notwendigerweise konstant sein. Während des mehrfachen Wiederholens des Schrittes a) in Verfahrensschritt c) oder auch in Verfahrensschritt d) kann die relative Gasfeuchte R1 unterschiedlich sein, sofern verwirklicht ist, dass das Befeuchtungsmittel an der Oberfläche des Festkörpers adsorbiert wird. Auch die relative Gasfeuchte R2 der zweiten Atmosphäre kann bei der Wiederholung des Verfahrensschrittes b) während des Verfahrensschrittes c) variieren, sofern verwirklicht ist, dass während der Durchführung des Verfahrensschrittes b) das Befeuchtungsmittel teilweise von der Oberfläche des Festkörpers desorbiert wird.

Auch die Zeiträume t1 und t2 können bei der Wiederholung der Verfahrensschritte a) und b) in Verfahrensschritt c) variieren.

Es hat sich herausgestellt, dass durch die Anwendung des erfindungsgemäßen Verfahrens bereits innerhalb eines kurzen Zeitraumes eine Benetzungskatastrophe auf der Oberfläche des Festkörpers erzeugt werden kann, so dass ein durchgängiger Film von Befeuchtungsmittel auf dem Festkörper gebildet wird.

Durch das Aussetzen des Festkörpers einer ersten mit dem Befeuchtungsmittel beispielsweise gesättigten Atmosphäre werden Moleküle des Befeuchtungsmittels an der Festkörperoberfläche adsorbiert. Durch das Aussetzen des Festkörpers einer zweiten Atmosphäre mit einer relativen Feuchte des Befeuchtungsmittels, die wesentlich geringer als die relative Feuchte des Befeuchtungsmittels in der ersten Atmosphäre ist, kommt es zu einer Desorption der auf der Oberfläche adsorbierten Moleküle des Befeuchtungsmittels.

Bei der Desorption können jedoch Moleküle des Befeuchtungsmittels auf der Oberfläche zurückbleiben. Diese bewirken, dass die Oberfläche für die Adsorption des Befeuchtungsmittels aktiviert ist, d.h. dass die Wahrscheinlichkeit der Adsorption des Befeuchtungsmittels erhöht ist.

Bei der Wiederholung des Schrittes a) während Schritt c) kann somit eine höhere Menge an Befeuchtungsmittel an der Oberfläche des Festkörpers adsorbiert werden als bei dem ersten Durchlaufen des Schrittes a). Durch die geschickte Wahl von dem Zeitraum t1 und t2 kann somit die Oberfläche des Festkörpers bei jeder Wiederholung der Schritte a) und b) für die Adsorption von Wasser stärker aktiviert werden, bis die Aktivierung ausreichend ist, dass es bei Schritt d) nach dem Zeitraum t3 zu einer Benetzungskatastrophe des Festkörpers mit dem Befeuchtungsmittel kommt.

Unter relative Gasfeuchte des Befeuchtungsmittels wird im Rahmen der Erfindung das prozentuale Verhältnis von momentanem Befeuchtungsmittelgasdruck und dem Sättigungsbefeuchtungsmittelgasdruck einer Atmosphäre verstanden.

Vorzugsweise ist vorgesehen, dass t1 > t2 und/oder t3 > t1 ist, wobei t3 vorzugsweise derart gewählt ist, dass an zumindest einem Teil der Oberfläche des Festkörpers eine Benetzungskatastrophe des Befeuchtungsmittel entsteht.

Es hat sich herausgestellt, dass mit dem erfindungsgemäßen Verfahren Oberflächen eines Festkörpers besonders gut befeuchtet werden können, wenn der Zeitraum, in dem der Festkörper der ersten Atmosphäre ausgesetzt ist, länger ist als der Zeitraum, in dem der Festkörper der zweiten Atmosphäre ausgesetzt ist. Insbesondere wenn die zweite relative Gasfeuchte R2 der zweiten Atmosphäre wesentlich geringer ist als die erste relative Gasfeuchte R1 der ersten Atmosphäre, beispielsweise wenn die erste relative Gasfeuchte R1 nahe 100 % ist und die zweite Atmosphäre die Umgebungsluft ist, so dass die zweite relative Gasfeuchte R2 ca. 70 % ist, erfolgt ein Desorptionsvorgang des Befeuchtungsmittels an der Oberfläche des Festkörpers sehr schnell im Vergleich zu dem vorangegangenen Adsorptionsvorgang.

Daher ist es von Vorteil, wenn der Zeitraum t2 geringer ist als der Zeitraum t1, so dass das Befeuchtungsmittel teilweise von der Oberfläche des Festkörpers desorbiert wird und ausreichend Befeuchtungsmittel zur Aktivierung der Oberfläche für das Befeuchtungsmittel verbleibt. Der Zeitraum t3 kann derart gewählt werden, dass bei ausreichender Aktivierung der Oberfläche für das Befeuchtungsmittel an dem Festkörper eine Benetzungskatastrophe des Befeuchtungsmittels entsteht.

Vorzugsweise ist vorgesehen, dass die erste Atmosphäre eine mit dem Befeuchtungsmittel gesättigte oder quasigesättigte Atmosphäre ist. Das heißt, dass die erste relative Gasfeuchte R1 des Befeuchtungsmittels 100 % oder nahe 100 % ist. Eine derartige Atmosphäre ist besonders dazu geeignet, einen Adsorptionsvorgang des Befeuchtungsmittel an der Oberfläche des Festkörpers zu erzeugen.

Vorzugsweise ist vorgesehen, dass die zweite relative Gasfeuchte R2 der zweiten Atmosphäre mindestens 10 % geringer ist als die erste relative Gasfeuchte R2 der ersten Atmosphäre. Es hat sich herausgestellt, dass der Desorptionsvorgang des Befeuchtungsmittels von der Oberfläche des Festkörpers während Verfahrensschritt b) in vorteilhafter Weise erfolgt, wenn zwischen der zweiten relativen Gasfeuchte R2 der zweiten Atmosphäre und der ersten relativen Gasfeuchte R1 der ersten Atmosphäre ein großer Abstand ist. Durch eine niedrig gewählte zweite relative Gasfeuchte R2 der zweiten Atmosphäre erfolgt darüber hinaus der Desorptionsvorgang sehr schnell, so dass der Zeitraum t2 kurz sein kann.

Das erfindungsgemäße Verfahren kann beispielsweise durchgeführt werden, indem der Festkörper zum Durchführen des Verfahrensschrittes a) in eine erste Kammer und zum Durchführen des Verfahrensschrittes b) in eine zweite Kammer oder in einen Freiraumbereich transportiert wird. In der ersten Kammer wird dabei die erste Atmosphäre erzeugt oder liegt dort vor. In der zweiten Kammer und in dem Freiraumbereich wird die zweite Atmosphäre erzeugt oder liegt dort vor.

Unter Freiraumbereich wird dabei ein offener Raum verstanden, so dass die zweite Atmosphäre die Umgebungsatmosphäre sein kann.

Auf diese Weise ist das erfindungsgemäße Verfahren auf besonders einfache Art und Weise durchführbar, da der Festkörper lediglich in die erste Kammer und in die zweite Kammer bzw. den Freiraumbereich transportiert werden muss.

Dabei kann vorgesehen sein, dass mehrere erste Kammern und mehrere zweite Kammern oder Freiraumbereiche vorgesehen sind, wobei die ersten und zweiten Kammern oder die ersten Kammern oder die Freiraumbereiche abwechselnd angeordnet sind. Durch eine derartige Anordnung wird das Durchführen des erfindungsgemäßen Verfahrens auf besonders einfache Art und Weise ermöglicht, da der Festkörper lediglich in eine Richtung transportiert werden muss. Der Festkörper wird dann für das im Verfahrensschritt c) vorgesehene mehrfache Wiederholen der Schritte a) und b) der Festkörper in jeweils die ersten bzw. zweiten Kammern oder Freiraumbereiche, in denen die entsprechenden Atmosphären vorliegen, transportiert.

Es kann vorgesehen sein, dass zum Durchführen des Verfahrensschrittes d) eine dritte Kammer vorgesehen ist, in die der Festkörper transportiert wird. In der dritten Kammer ist die erste Atmosphäre erzeugbar oder liegt vor.

In einem erfindungsgemäßen Verfahren kann dabei vorgesehen sein, dass der Festkörper kontinuierlich durch die erste Kammer, die zweite Kammer, den Freiraumbereich und/oder die dritte Kammer transportiert wird. Selbstverständlich ist es auch möglich, dass der Festkörper zunächst in die erste Kammer transportiert wird, dort bis zum Erreichen des Endes des Zeitraumes t1 verbleibt, danach in die zweite Kammer oder in den Freiraumbereich transportiert wird, dort bis zum Ende des Zeitraumes t2 verbleibt und nach dem entsprechenden Wiederholen der Schritte a) und b) in die dritte Kammer transportiert wird und dort für den Zeitraum t3 verbleibt.

Bei dem erfindungsgemäßen Verfahren, bei dem der Festkörper kontinuierlich durch die erste bis dritte Kammer bzw. den Freiraumbereich transportiert wird, ist vorzugsweise vorgesehen, dass die Abmessungen der ersten Kammer, der zweiten Kammer, des Freiraumbereiches und/oder der dritten Kammer und/oder die Transportgeschwindigkeit des Festkörpers an t1, t2 und/oder t3 angepasst ist. Auf diese Weise wird gewährleistet, dass bei dem Durchführen der Verfahrensschritte a), b) und d) der Festkörper jeweils nur den vorgesehenen Zeitraum t1, t2 bzw. t3 der entsprechenden ersten bzw. zweiten Atmosphäre ausgesetzt ist.

Der Transport des Festkörpers kann selbstverständlich auch diskontinuierlich erfolgen.

Das erfindungsgemäße Verfahren kann auch durchgeführt werden, indem der Festkörper in einem Behälter angeordnet ist, in dem zur Durchführung von Schritt a) und c) die erste Atmosphäre und zur Durchführung von Schritt b) die zweite Atmosphäre erzeugt wird. Dies hat den Vorteil, dass der Festkörper an einem Platz verbleiben kann und nicht transportiert werden muss. Dies ist insbesondere bei besonders großen Festkörpern oder Festkörpern in Form von Granulat oder Pulver von Vorteil.

Es kann vorgesehen sein, dass der Behälter ein Rührwerk aufweist oder eine rotierende Trommel ist. Wenn der Festkörper als Granulat oder Pulver ausgebildet ist, ist über das Rührwerk oder eine rotierende Trommel eine gute Durchmischung des Festkörpers mit der Atmosphäre möglich, so dass möglichst viele Teile des Festkörpers mit der entsprechenden Atmosphäre zur Adsorption oder Desorption des Befeuchtungsmittels reagieren können.

Der Behälter kann auch ein Wirbelschichtreaktor sein.

Bei dem erfindungsgemäßen Verfahren kann der Festkörper ein Granulat, ein Pulver, ein bandförmiges Material oder ein Festkörpergegenstand sein. Als bandförmiges Material kann der Festkörper beispielsweise Papier oder eine Folie sein.

Die Erfindung betrifft ferner eine Vorrichtung zur Durchführung des erfindungsgemäßen Verfahrens,

Im Folgenden wird unter Bezugnahme auf die nachfolgenden Figuren die Erfindung näher erläutert. Es zeigen:
- Fig. 1: eine schematische Auftragung des Grades der Bedeckung des Festkörpers über die Zeit,
- Fig. 2a und Fig. 2b: eine erste Vorrichtung zur Durchführung des erfindungsgemäßen Verfahrens,
- Fig. 3: eine zweite Vorrichtung zur Durchführung des erfindungsgemäßen Verfahrens,
- Fig. 4: eine dritte Vorrichtung zur Durchführung des erfindungsgemäßen Verfahrens,
- Fig. 5: eine vierte Vorrichtung zur Durchführung des erfindungsgemäßen Verfahrens,
- Fig. 6: eine fünfte Vorrichtung zur Durchführung eines erfindungsgemäßen Verfahrens und
- Fig. 7: eine sechste Vorrichtung zur Durchführung des erfindungsgemäßen Verfahrens.

Bei dem erfindungsgemäßen Verfahren ist vorgesehen, dass zur Befeuchtung von Oberflächen eines Festkörpers mit einem gasförmigen Befeuchtungsmittel der Festkörper zunächst an der ersten Atmosphäre mit einer ersten relativen Gasfeuchte R1 des Befeuchtungsmittels für einen bestimmten Zeitraum ausgesetzt wird. Dabei ist die relative Gasfeuchte R1 der ersten Atmosphäre derart zu wählen, dass das Befeuchtungsmittel an der Oberfläche des Festkörpers adsorbiert. Dadurch wird die Oberfläche des Festkörpers teilweise von dem Befeuchtungsmittel bedeckt.

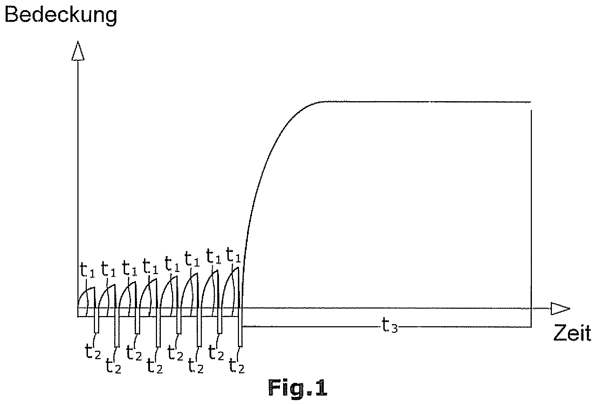

In Fig. 1 ist die Bedeckung der Oberfläche des Festkörpers schematisch über die Zeit aufgetragen. Der erste Verfahrensschritt a) des erfindungsgemäßen Verfahrens erfolgt dabei, indem das Aussetzen des Festkörpers der ersten Atmosphäre über den Zeitraum t1 geschieht.

Anschließend wird der Festkörper einer zweiten Atmosphäre mit einer zweiten relativen Gasfeuchte R2 des Befeuchtungsmittels zur einen bestimmten Zeitraum ausgesetzt.

Dabei ist die zweite relative Gasfeuchte derart gewählt, dass das Befeuchtungsmittel teilweise von der Oberfläche des Festkörpers desorbiert. Der Verfahrensschritt b) erfolgt über den Zeitraum t2. Wie Fig. 1 zu entnehmen ist, nimmt der Grad der Bedeckung durch die Desorption ab.

Anschließend werden in Verfahrensschritt c) die beiden Verfahrensschritte a), b) abwechselnd mehrfach wiederholt, wobei, wie aus Fig. 1 ersichtlich ist, der Grad der Bedeckung bei dem jeweils ersten Verfahrensschritt immer stärker zunimmt.

Nach mehrfachem Wiederholen der beiden Verfahrensschritte wird in Verfahrensschritt d) der Festkörper für einen wesentlich längeren Zeitraum, der in Fig. 1 mit t3 bezeichnet ist, wieder der ersten Atmosphäre ausgesetzt, so dass es zu einer großflächigen Bedeckung des Festkörpers kommt. Untersuchungen beim Befeuchten von Oberflächen eines Festkörpers mit Wasser haben ergeben, dass bei der Adsorption an der Oberfläche des Festkörpers die Wassermoleküle sich als tetraedrisch angeordnete Wassermoleküle und als ungeordnete Wassermoleküle an der Oberfläche des Festkörpers festsetzen. Bei dem Durchführen des zweiten Verfahrensschrittes scheinen zunächst nur die ungeordnet angeordneten Wassermoleküle zu verdunsten, wobei die tetraedrisch angeordneten Wassermoleküle aufgrund höherer Bindungskräfte untereinander länger an der Oberfläche verweilen.

Wird der Zeitraum, bei dem der Festkörper der zweiten Atmosphäre ausgesetzt ist, relativ kurz gewählt, verbleiben eine Vielzahl von stabileren Wasserclustern, die tetraedrisch angeordnete Wassermoleküle umfassen, an der Oberfläche zurück. Die verbleibenden stabilen Wassercluster bewirken eine Aktivierung der Oberfläche des Festkörpers, so dass bei der Wiederholung des ersten Verfahrensschrittes a) eine größere Menge des Wassers an der Oberfläche absorbiert wird als bei der vorangegangenen Durchführung des Verfahrensschrittes a). Durch Wiederholen der beiden Verfahrensschritte nimmt die Aktivierung der Oberfläche des Festkörpers derart zu, dass der letzte Verfahrensschritt d) durchgeführt werden kann, bei dem so viel Wasser an der Oberfläche adsorbiert wird, dass es zur Benetzungskatastrophe kommen kann.

Das erfindungsgemäße Verfahren hat somit den Vorteil, dass innerhalb eines relativ kurzen Zeitraumes eine vollständige Benetzung der Oberfläche des Festkörpers trotz Verwendung eines gasförmigen Befeuchtungsmittels erreicht werden kann.

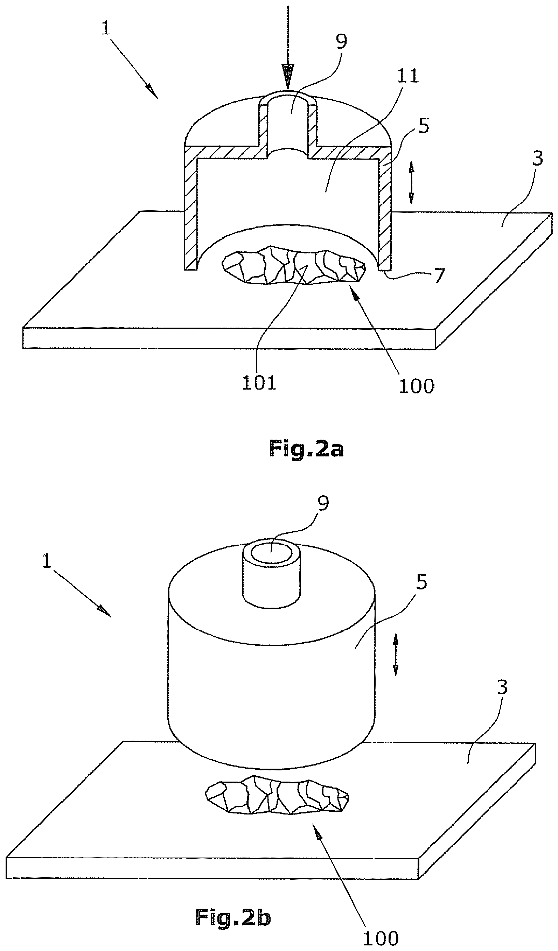

In Fig. 2a und 2b ist eine erste Vorrichtung 1 zur Durchführung des erfindungsgemäßen Verfahrens gezeigt. Die Vorrichtung besteht aus einer Arbeitsplatte 3, auf die der Festkörper 100 platziert werden kann. In dem in Fig. 2a und 2b dargestellten Ausführungsbeispiel liegt der Festkörper als größerer Festkörpergegenstand vor.

Die Vorrichtung 1 weist ferner eine Glocke 5 auf, die über den Festkörper gestülpt werden kann. Die Glocke 5 schließt dabei mit ihrem unteren Rand 7 dicht mit der Oberfläche der Arbeitsplatte 3 ab. Durch eine Öffnung 9 in der Glocke 5 kann ein Gas in den Innenraum 11 der Glocke 5 geleitet werden.

Zur Durchführung des erfindungsgemäßen Verfahrens wird in dem über dem Festkörper 100 gestülpten Zustand der Glocke 5 durch die Öffnung 9 ein Gasgemisch mit dem gasförmigen Befeuchtungsmittel oder nur gasförmiges Befeuchtungsmittel in den Innenraum 11 geleitet.

Dadurch entsteht in dem Innenraum 11 eine erste Atmosphäre mit einer ersten relativen Gasfeuchte R1 des Befeuchtungsmittels, die so eingestellt ist, dass das Befeuchtungsmittel an der Oberfläche 101 des Festkörpers 100 adsorbiert. Der Festkörper wird über einen bestimmten Zeitraum t1 der ersten Atmosphäre ausgesetzt, so dass der erfindungsgemäße Verfahrensschritt a) durchgeführt wird.

Anschließend wird die Glocke 5 von der Arbeitsplatte 3 abgehoben, so dass der Festkörper 100 der die Vorrichtung 1 umgebenden Atmosphäre ausgesetzt ist. Diese Atmosphäre ist eine zweite Atmosphäre mit einer zweiten relativen Gasfeuchte R2 des Befeuchtungsmittels. Die zweite Atmosphäre ist derart geschaffen, dass das Befeuchtungsmittel teilweise von der Oberfläche 101 des Festkörpers 100 desorbiert. Der Festkörper 100 wird für einen Zeitraum t2 dieser zweiten Atmosphäre ausgesetzt, so dass der erfindungsgemäße Verfahrensschritt b) durchgeführt wird.

Der erste Verfahrensschritt a) des erfindungsgemäßen Verfahrens kann nun wiederholt werden, indem die Glocke 5 wieder auf die Arbeitsplatte 3 aufgesetzt wird und durch die Öffnung 9 das gasförmige Befeuchtungsmittel in den Innenraum 11 geleitet wird. Nach mehrfachem Wiederholen der Verfahrensschritte a) und b) in Verfahrensschritt c) kann schließlich die Glocke 5 zum Durchführen von Verfahrensschritt d) wieder auf die Arbeitsplatte 3 gesetzt werden, so dass der Festkörper 100 über einen Zeitraum t3 der ersten Atmosphäre mit einer ersten relativen Gasfeuchte R1 ausgesetzt werden kann, bis es vorzugsweise zu einer Benetzungskatastrophe auf der Oberfläche 101 des Festkörpers 100 kommt.

Bei dem in Fig. 2a und 2b dargestellten Ausführungsbeispiel einer Vorrichtung zur Durchführung des erfindungsgemäßen Verfahrens erfolgt das Befeuchten des Festkörpers chargenweise, d.h., dass immer nur eine bestimmte Menge des Festkörpers 100 dem Verfahren unterzogen wird,

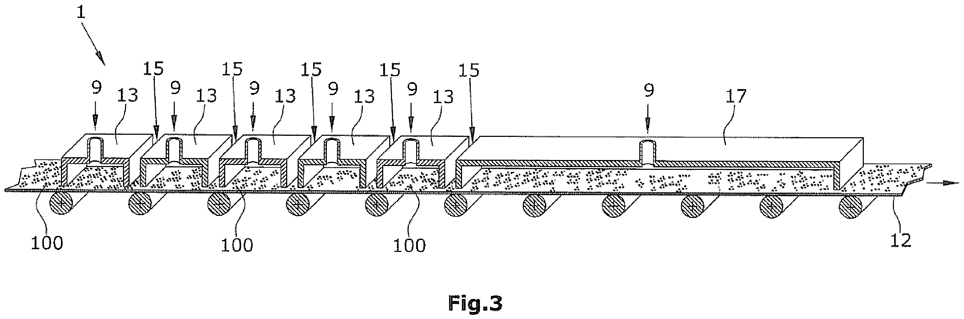

In Fig. 3 ist ein zweites Ausführungsbeispiel einer Vorrichtung 1 zur Durchführung des erfindungsgemäßen Verfahrens gezeigt.
Mit der in Fig. 3 dargestellten Vorrichtung 1 ist eine kontinuierliche Durchführung des erfindungsgemäßen Verfahrens möglich.

Die in Fig. 3 dargestellte Vorrichtung 1 weist ein Förderband 12 auf, auf dem der Festkörper 100 in Pulver- oder Granulatform transportiert wird. Die Vorrichtung weist mehrere erste Kammern 13 auf, die jeweils eine Öffnung 9 besitzen, durch die das gasförmige Befeuchtungsmittel in die Kammer 13 geleitet werden kann. In der Kammer 13 kann somit die erste Atmosphäre mit einer ersten relativen Gasfeuchte R1 erzeugt werden. Die erste Atmosphäre ist dabei derart geschaffen, dass das Befeuchtungsmittel an der Oberfläche des Festkörpers adsorbiert wird. Dabei kann dauerhaft gasförmiges Befeuchtungsmittel durch die Öffnung 9 in die ersten Kammern 13 geleitet werden, so dass trotz der zwischen ersten Kammern 13 und dem Förderband verbleibenden Spalten in den Kammern 13 jeweils die erste Atmosphäre erzeugt werden kann bzw. aufrecht erhalten wird.

Nach dem Durchlaufen einer ersten Kammern 13 in Verfahrensschritt a) gelangt der Festkörper 100 zur Durchführung von Verfahrensschritt b) in einen Freiraumbereich 15, der der Umgebungsatmosphäre ausgesetzt ist. Die Umgebungsatmosphäre ist dabei die zweite Atmosphäre mit einer zweiten relativen Gasfeuchte R2 des Befeuchtungsmittels. In diesem Bereich desorbiert das Befeuchtungsmittel teilweise von der Oberfläche des Festkörpers. Die ersten Kammern 13, die Freiraumbereiche 15 und/oder die Geschwindigkeit des Förderbandes 12 sind dabei so ausgelegt, dass der Festkörper für einen Zeitraum t1 in der ersten Kammer der ersten Atmosphäre ausgesetzt ist und für einen Zeitraum t2 der zweiten Atmosphäre in dem Freiraumbereich 15 ausgesetzt ist. Nach mehrmaligem Durchlaufen der beiden Verfahrensschritte a) und b) in Verfahrensschritt c) wird der Festkörper 100 für einen längeren Zeitraum t3 der ersten Atmosphäre ausgesetzt, indem er in eine dritte Kammer transportiert wird. In dieser Kammer wird vorzugsweise so viel Befeuchtungsmittel an der Oberfläche des Festkörpers adsorbiert, dass es zu einer Benetzungskatastrophe an der Oberfläche des Festkörpers kommt.

Die dritte Kammer 17 ist wesentlich größer ausgestaltet als die ersten Kammern 13, so dass während des Verfahrensschrittes d) der Festkörper über einen längeren Zeitraum der ersten Atmosphäre ausgesetzt ist. In einem nicht dargestellten Ausführungsbeispiel einer Vorrichtung sind anstelle der Freiraumbereiche 15 zweite Kammern angeordnet, in denen die zweite Atmosphäre erzeugbar ist.

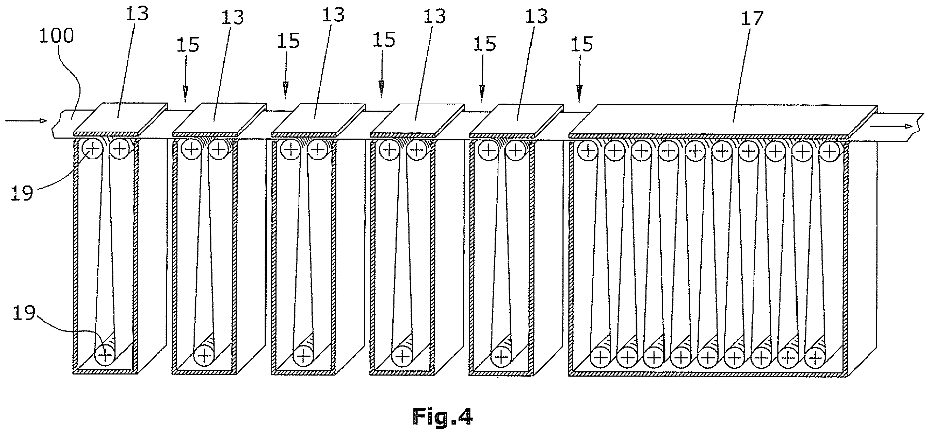

In Fig. 4 ist eine Vorrichtung 1 zur Durchführung des erfindungsgemäßen Verfahrens gezeigt, bei der der Festkörper 100 als bahnförmiges Material vorliegt. Der Festkörper in Form eines bahnförmigen Materials wird über entsprechende Transportvorrichtungen in Form von Transportrollen 19 transportiert. Dabei durchläuft der Festkörper 100 für Verfahrensschritt a) eine erste Kammer 13, in der eine erste Atmosphäre mit einer ersten relativen Gasfeuchte R1 herrscht, so dass das Befeuchtungsmittel an der Oberfläche des Festkörpers adsorbiert wird. Nach Verlassen der ersten Kammer 13 durchläuft der Festkörper 100 in Verfahrensschritt b) einen Freiraumbereich 15.

Dadurch wird der Festkörper der Umgebungsatmosphäre ausgesetzt, die die zweite Atmosphäre mit einer zweiten relativen Gasfeuchte R2 des Befeuchtungsmittels bildet. Dadurch kann das Befeuchtungsmittel teilweise von der Oberfläche des Festkörpers desorbieren. Anschließend durchläuft der Festkörper 100 wiederum eine erste Kammer mit einer darin herrschenden ersten Atmosphäre. Nach mehrfachem Durchlaufen von ersten Kammern 13 und Freiraumbereichen 15 in Verfahrensschritt c) wird der Festkörper 100 in eine dritte Kammer 17 transportiert, in der der Festkörper als Verfahrensschritt d) der ersten Atmosphäre solange ausgesetzt wird, bis vorzugsweise eine Benetzungskatastrophe an der Oberfläche des Festkörpers 100 entsteht.

Die Transportgeschwindigkeit des Festkörpers 100 und/oder die Größe der ersten Kammer 13, der Freiraumbereiche 15 und der dritten Kammer 17 sind jeweils so ausgelegt, dass der Festkörper in den ersten Kammern 13 einen Zeitraum t1 der ersten Atmosphäre ausgesetzt wird, in den Freiraumbereichen 15 der zweiten Atmosphäre für einen Zeitraum t2 und für einen Zeitraum t3 der ersten Atmosphäre in der dritten Kammer 17 ausgesetzt wird.

Die in Fig. 4 dargestellte Vorrichtung ist beispielsweise in der Druckindustrie einsetzbar, bei der häufig Papier oder Folien für einen Druckprozess befeuchtet werden müssen.

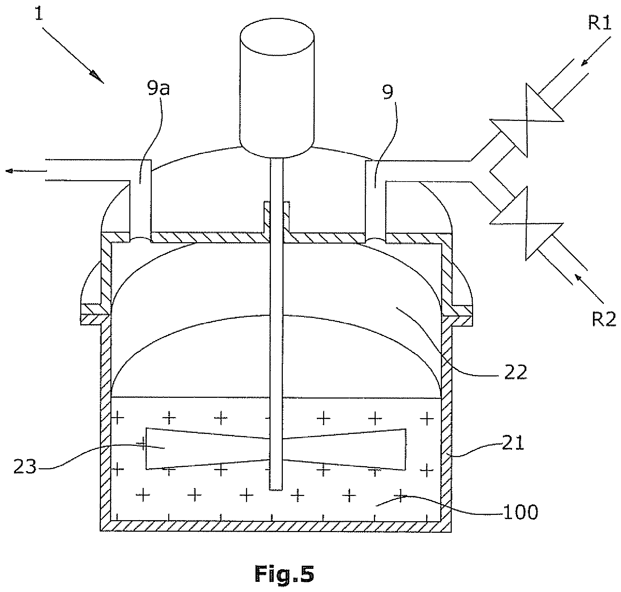

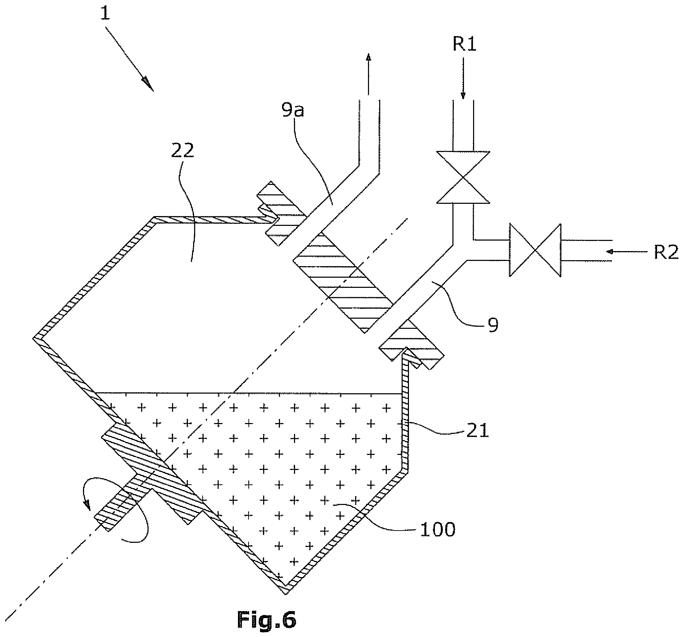

In Fig. 5 und Fig. 6 sind Vorrichtungen 1 zur Durchführung des erfindungsgemäßen Verfahrens gezeigt, bei denen der Festkörper 3 granulat- oder pulverförmig vorliegt und chargenweise befeuchtet wird.

In Fig. 5 ist dazu der Festkörper 100 in einem Behälter 21 angeordnet. Durch eine Öffnung 9 kann ein Gasgemisch mit gasförmigem Befeuchtungsmittel bzw. das gasförmige Befeuchtungsmittel in den Innenraum 22 des Behälters 21 geleitet werden. Über eine Rührvorrichtung 23 kann dabei der Feststoff mit der in dem Innenraum 22 herrschenden Atmosphäre vermengt werden, so dass eine gute Reaktion der Oberfläche des Festkörpers mit der Atmosphäre entstehen kann.

Zum Erzeugen der ersten Atmosphäre mit einer ersten relativen Gasfeuchte R1 und der zweiten Atmosphäre mit einer relativen Gasfeuchte R2 können durch die Öffnung 9 über entsprechende Zuleitungen Gasgemische, die die entsprechende Atmosphäre erzeugen, abwechselnd zugeleitet werden. Nach dem Durchführen einer der erfindungsgemäßen Verfahrensschritte kann über einen Auslass 9a die zuletzt vorherrschende Atmosphäre in dem Innenraum 22 des Behälters 21 abgeleitet werden.

In Fig. 6 ist eine ähnliche Vorrichtung wie in Fig. 5 dargestellt, mit dem Unterschied, dass anstelle eines Rührwerkes der Behälter 21 als rotierende Trommel ausgestaltet ist, über die eine gute Durchmengung des pulver- oder granulatförmigen Festkörpers mit der in dem Innenraum 22 herrschenden Atmosphäre ermöglicht werden kann.

In dem Innenraum 22 wird wiederum über die abwechselnde Zuleitung von unterschiedlichen Gasgemischen die erste bzw. zweite Atmosphäre zur Durchführung des erfindungsgemäßen Verfahrens erzeugt. Über einen Auslass 9a kann die zuletzt vorherrschende Atmosphäre aus dem Innenraum 22 abgeleitet werden.

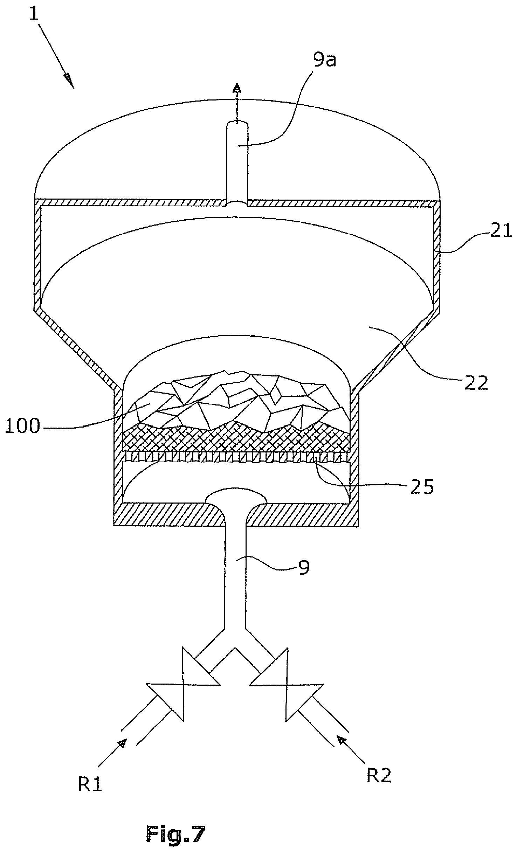

In Fig. 7 ist eine weitere Vorrichtung zur Durchführung des erfindungsgemäßen Verfahrens gezeigt. Der Festkörper 100 kann in dem vorliegenden Beispiel entweder als Granulat oder auch als Festkörpergegenstand vorliegen. Über eine Zuleitung 9 werden die Gasgemische zur Erzeugung der ersten bzw. der zweiten Atmosphäre in den Behälter 21 geleitet. Der Festkörper 100 liegt dabei auf einem Rost 25, durch das die Gasgemische zur Erzeugung der Atmosphäre strömen. Sofern der Festkörper 100 als großer Festkörpergegenstand ausgeführt ist, kann die entsprechend gebildete Atmosphäre den Festkörper 100 sehr gut umströmen, so dass eine gute Reaktion der Oberfläche des Festkörpers mit der Atmosphäre entstehen kann.

Wenn der Festkörper 100 als Granulat vorliegt, kann der Behälter 21 als Wirbelschichtreaktor betrieben werden, so dass das Granulat von dem durch die Öffnung 9 einströmenden Gasgemisch aufgewirbelt wird, so dass eine besonders gute Reaktion der Oberfläche des Festkörpers 100 mit der Atmosphäre erzeugt wird. Über einen Auslass 9a kann die entsprechend in dem Innenraum 22 des Behälters 21 herrschende Atmosphäre abgelassen werden.

Bei der Durchführung eines erfindungsgemäßen Verfahrens müssen die relativen Gasfeuchten R1 und R2 der ersten und der zweiten Atmosphäre sowie die Zeiträume t1, t2 und t3 nicht notwendigerweise konstant sein. Selbstverständlich ist es auch möglich, dass bei dem Durchführen des ersten Verfahrensschrittes a) eine andere relative Gasfeuchte R1 und ein anderer Zeitraum t1 verwendet wird als bei der Wiederholung dieses Verfahrensschrittes bei dem dritten Verfahrensschritt c).
Gleiches gilt auch für die zweite relative Gasfeuchte R2 der zweiten Atmosphäre und dem entsprechenden Zeitraum t2. Die entsprechende erste Gasfeuchte R1 und der Zeitraum t1 müssen lediglich derart gewählt sein, dass während des Aussetzens des Festkörpers der ersten Atmosphäre das Befeuchtungsmittel an der Oberfläche des Festkörpers adsorbiert.

Die zweite Atmosphäre und der zweite Zeitraum t2 müssen so gewählt sein, dass während des Aussetzens des Festkörpers der zweiten Atmosphäre Befeuchtungsmittel teilweise von der Oberfläche des Festkörpers desorbiert wird, jedoch Befeuchtungsmittel an der Oberfläche des Festkörpers verbleibt.

Der Zeitraum t3 ist schließlich so zu wählen, dass sich die gewünschte Menge an Befeuchtungsmittel an der Oberfläche des Festkörpers abgesetzt hat. Häufig ist dabei bevorzugt, dass es zu einer Benetzungskatastrophe an der Oberfläche des Festkörpers kommt.

## Patentansprüche

1. Verfahren zum Befeuchten von Oberflächen (101) eines Festkörpers (100) mit einem gasförmigen Befeuchtungsmittel, insbesondere Wasser, bestehend aus folgenden Schritten:
a) Aussetzen zumindest eines Teils des Festkörpers (100) einer ersten Atmosphäre mit einer ersten relativen Gasfeuchte R1 des Befeuchtungsmittels für einen Zeitraum t1, derart, dass das Befeuchtungsmittel an der Oberfläche (101) des Festkörpers (100) adsorbiert wird, wodurch die Oberfläche des Festkörpers teilweise vom Befeuchtungsmittel bedeckt wird,
b) Aussetzen zumindest des Teils des Festkörpers einer zweiten Atmosphäre mit einer zweiten relativen Gasfeuchte R2 des Befeuchtungsmittels für einen Zeitraum t2, derart, dass das Befeuchtungsmittel teilweise von der Oberfläche (101) des Festkörpers (100) desorbiert wird,
c) Mehrfaches Wiederholen der Schritte a) und b),
d) Aussetzen zumindest des Teils des Festkörpers (100) der ersten Atmosphäre für einen Zeitraum t3, wobei nach dem Zeitraum t3 an zumindest dem Teil des Festkörpers (100) eine Benetzungskatastrophe des Befeuchtungsmittels vorliegt.

2. Verfahren nach Anspruch 1, **dadurch gekennzeichnet, dass** t1 > t2 und/oder t3 > t1 ist.

3. Verfahren nach Anspruch 1 oder 2, **dadurch gekennzeichnet, dass** die erste Atmosphäre eine mit dem Befeuchtungsmittel gesättigte oder quasigesättigte Atmosphäre ist.

4. Verfahren nach einem der Ansprüche 1 bis 3, **dadurch gekennzeichnet, dass** die zweite relative Gasfeuchte R2 der zweiten Atmosphäre mindestens 10 % geringer ist als die erste relative Gasfeuchte R1 der ersten Atmosphäre.

5. Verfahren nach einem der Ansprüche 1 bis 4, **dadurch gekennzeichnet, dass** der Festkörper (100) zum Durchführen des Schrittes a) in eine erste Kammer (13) und zum Durchführen des Schrittes b in eine zweite Kammer oder in einen Freiraumbereich (15) transportiert wird, wobei in der ersten Kammer (13) die erste Atmosphäre erzeugt wird oder vorliegt und in der zweiten Kammer oder in dem Freiraumbereich (15) die zweite Atmosphäre erzeugt wird oder vorliegt.

6. Verfahren nach Anspruch 5, **gekennzeichnet durch** mehrere erste Kammern (13) und mehrere zweite Kammern oder Freiraumbereiche (15), wobei die ersten und zweiten Kammern oder ersten Kammern (13) und die Freiraumbereiche (15) abwechselnd angeordnet sind.

7. Verfahren nach Anspruch 5 oder 6, **dadurch gekennzeichnet, dass** der Festkörper (100) zum Durchführen des Schrittes d) in eine dritte Kammer (17) transportiert wird, wobei in der dritten Kammer (17) die erste Atmosphäre erzeugt wird oder vorliegt.

8. Verfahren nach einem der Ansprüche 5 bis 7, **dadurch gekennzeichnet, dass** der Festkörper (100) kontinuierlich durch die erste Kammer (13), die zweite Kammer, den Freiraumbereich (15) und/oder die dritte Kammer (17) transportiert wird.

9. Verfahren nach Anspruch 8, **dadurch gekennzeichnet, dass** die die Abmessungen der ersten Kammer (13), der zweiten Kammer, des Freiraumbereichs (15) und/oder der dritten Kammer (17) und/oder die Transportgeschwindigkeit des Festkörpers (100) an t1, t2 und/oder t3 angepasst ist.

10. Verfahren nach einem der Ansprüche 3 bis 5, **dadurch gekennzeichnet, dass** der Transport des Festkörpers (100) diskontinuierlich erfolgt.

11. Verfahren nach einem der Ansprüche 1 bis 4, **dadurch gekennzeichnet, dass** der Festkörper in einem Behälter (21) angeordnet ist, in dem zur Durchführung von Schritt a) und c) die erste Atmosphäre und zum Durchführen von Schritt b) die zweite Atmosphäre erzeugt wird.

12. Verfahren nach Anspruch 11, **dadurch gekennzeichnet, dass** der Behälter (21) ein Rührwerk (13) aufweist oder eine rotierende Trommel ist.

13. Verfahren nach Anspruch 11, **dadurch gekennzeichnet, dass** der Behälter (21) ein Wirbelschichtreaktor ist.

14. Verfahren nach einem der Ansprüche 1 bis 13, **dadurch gekennzeichnet, dass** der Festkörper (100) ein Granulat, ein Pulver, ein bahnförmiges Material oder ein Festkörpergegenstand ist.

## Claims

1. A method for moistening surfaces (101) of a solid (100) with a gaseous moistening agent, in particular water, comprising the following steps:
a) exposing at least a portion of the solid (100) to a first atmosphere with a first relative gas humidity R1 of the moistening agent for a time period t1 such that the moistening agent is adsorbed at the surface (101) of the solid (100), whereby the surface of the solid is partially covered by the moistening agent,
b) exposing at least a portion of the solid to a second atmosphere with a second relative gas humidity R2 of the moistening agent for a time period t2 such that the moistening agent is partially desorbed from the surface (101) of the solid (100),
c) multiple repetitions of the steps a) and b),
d) exposing at least a portion of the solid (100) to the first atmosphere for a time period t3, wherein, after the time period t3, a wetting disaster with the moistening agent exists at at least the portion of the solid (100).

2. The method according to claim 1, **characterized in that** t1 > t2 and/or t3 > t1.

3. The method according to claim 1 or 2, **characterized in that** the first atmosphere is an atmosphere saturated or a quasi-saturated with the moistening agent.

4. The method according to any one of claims 1 to 3, **characterized in that** the second relative gas humidity R2 of the second atmosphere is at least 10 % lower than the first relative gas humidity R1 of the first atmosphere.

5. The method according to any one of claims 1 to 4, **characterized in that** the solid (100), for performing the step a), is transported into a first chamber (13), and, for performing the step b), is transported into a second chamber or into a free space (15), wherein in the first chamber (13) the first atmosphere is generated or exists and in the second chamber or in the free space (15) the second atmosphere is generated or exists.

6. The method according to claim 5, **characterized by** a plurality of first chambers (13) and a plurality of second chambers or free spaces (15), wherein the first and the second chambers or the first chambers (13) and the free spaces (15) are alternately arranged.

7. The method according to claim 5 or 6, **characterized in that** the solid (100), for performing the step d), is transported into a third chamber (17), wherein in the third chamber (17) the first atmosphere is generated or exists.

8. The method according to any one of claims 5 to 7, **characterized in that** the solid (100) is continuously transported through the first chamber (13), the second chamber, the free space (15) and/or the third chamber (17).

9. The method according to claim 8, **characterized in that** the dimensions of the first chamber (13), the second chamber, the free space (15) and/or the third chamber (17), and/or the transport velocity of the solid (100) are adapted to t1, t2 and/or t3.

10. The method according to any one of claims 3 to 5, **characterized in that** the transport of the solid (100) is performed discontinuously.

11. The method according to any one of claims 1 to 4, **characterized in that** the solid is arranged in a container (21) in which, for performing steps a) and c), the first atmosphere, and, for performing step d), the second atmosphere are generated.

12. The method according to claim 11, **characterized in that** the container (21) comprises an agitator (13) or is a rotating drum.

13. The method according to claim 11, **characterized in that** the container (21) is a fluidized bed reactor.

14. The method according to any one of claims 1 to 13, **characterized in that** the solid (100) is a granulate, a powder, a sheet material or a solid object.

## Revendications

1. Procédé d'humidification de surfaces (101) d'un corps solide (100) avec un agent d'humidification à l'état gazeux, en particulier de l'eau, comprenant les étapes suivantes :
a) exposition d'au moins une partie du corps solide (100) à une première atmosphère avec une première humidité de gaz R1 relative de l'agent d'humidification pendant une durée t1 de telle sorte que l'agent d'humidification est adsorbé à la surface (101) du corps solide (100),
ce qui fait que la surface du corps solide est partiellement recouverte par l'agent d'humidification,
b) exposition d'au moins la partie du corps solide à une deuxième atmosphère avec une deuxième humidité de gaz R2 relative de l'agent d'humidification pendant une durée t2 de telle sorte que l'agent d'humidification est partiellement désorbé de la surface (101) du corps solide (100),
c) répétition à plusieurs reprises des étapes a) et b),
d) exposition d'au moins la partie du corps solide (100) à la première atmosphère pendant une durée t3, une catastrophe d'humidification de l'agent d'humidification étant présente après la durée t3 sur au moins la partie du corps solide (100).

2. Procédé selon la revendication 1, **caractérisé en ce que** t1 > t2 et/ou t3 > t1.

3. Procédé selon la revendication 1 ou 2, **caractérisé en ce que** la première atmosphère est une atmosphère saturée ou quasi saturée en agent d'humidification.

4. Procédé selon l'une des revendications 1 à 3, **caractérisé en ce que** la deuxième humidité de gaz R2 relative de la deuxième atmosphère est inférieure d'au moins 10 % à la première humidité de gaz R1 relative de la première atmosphère.

5. Procédé selon l'une des revendications 1 à 4, **caractérisé en ce que** le corps solide (100) est transporté dans une première chambre (13) pour la réalisation de l'étape a) et est transporté dans une deuxième chambre ou dans une zone d'espace libre (15) pour la réalisation de l'étape b), la première atmosphère étant produite ou étant présente dans la première chambre (13), et la deuxième atmosphère étant produite ou étant présente dans la deuxième chambre ou dans la zone d'espace libre (15).

6. Procédé selon la revendication 5, **caractérisé par** plusieurs premières chambres (13) et plusieurs deuxièmes chambres ou zones d'espace libre (15), les premières et deuxièmes chambres ou les premières chambres (13) et les zone d'espace libre (15) étant disposées de façon alternée.

7. Procédé selon la revendication 5 ou 6, **caractérisé en ce que** le corps solide (100) est transporté dans une troisième chambre (17) pour la réalisation de l'étape d), la première atmosphère étant produite ou étant présente dans la troisième chambre (17).

8. Procédé selon l'une des revendications 5 à 7, **caractérisé en ce que** le corps solide (100) est transporté en continu à travers la première chambre (13), la deuxième chambre, la zone d'espace libre (15) et/ou la troisième chambre (17).

9. Procédé selon la revendication 8, **caractérisé en ce que** les dimensions de la première chambre (13), de la deuxième chambre, de la zone d'espace libre (15) et/ou de la troisième chambre (17) et/ou la vitesse de transport du corps solide (100) sont adaptées à t1, t2 et/ou t3.

10. Procédé selon l'une des revendications 3 à 5, **caractérisé en ce que** le transport du corps solide (100) s'effectue de façon discontinue.

11. Procédé selon l'une des revendications 1 à 4, **caractérisé en ce que** le corps solide est disposé dans un récipient (21) dans lequel la première atmosphère est produite pour la réalisation des étapes a) et c), et la deuxième atmosphère est produite pour la réalisation de l'étape b).

12. Procédé selon la revendication 11, **caractérisé en ce que** le récipient (21) présente un agitateur (13) ou est un tambour rotatif.

13. Procédé selon la revendication 11, **caractérisé en ce que** le récipient (21) est un réacteur à lit fluidisé.

14. Procédé selon l'une des revendications 1 à 13, **caractérisé en ce que** le corps solide (100) est un granulat, une poudre, un matériau en forme de bande ou un objet de corps solide.
